Europäisches Patentamt

European Patent Office

Office européen des brevets

(11) Publication number: **0 519 391 A1**

# EUROPEAN PATENT APPLICATION

(21) Application number: **92110124.2**

(22) Date of filing: **16.06.92**

(51) Int. Cl.5: **G03B 17/24**, B23K 26/00

(30) Priority: **18.06.91 US 717226**

(43) Date of publication of application:
**23.12.92 Bulletin 92/52**

(84) Designated Contracting States:
**AT BE CH DE DK ES FR GB GR IT LI LU MC NL PT SE**

(71) Applicant: **EASTMAN KODAK COMPANY**
**343 State Street**
**Rochester, New York 14650-2201(US)**

(72) Inventor: **Schaffer, Wayne K. c/o EASTMAN KODAK COMPANY**
**Patent Legal Staff, 343 State Street**
**Rochester, New York 14650-2201(US)**
Inventor: **Adams, John E., c/o EASTMAN KODAK COMPANY**
**Patent Legal Staff, 343 State Street**
**Rochester, New York 14650-2201(US)**
Inventor: **Adams, Merle I., c/o EASTMAN KODAK COMPANY**
**Patent Legal Staff, 343 State Street**
**Rochester, New York 14650-2201(US)**
Inventor: **Dudley, Robert G., c/o EASTMAN**
**KODAK COMPANY**
**Patent Legal Staff, 343 State Street**
**Rochester, New York 14650-2201(US)**
Inventor: **Heath, John A., c/o EASTMAN**
**KODAK COMPANY**
**Patent Legal Staff, 343 State Street**
**Rochester, New York 14650-2201(US)**
Inventor: **Spurr, Robert W., c/o EASTMAN**
**KODAK COMPANY**
**Patent Legal Staff, 343 State Street**
**Rochester, New York 14650-2201(US)**
Inventor: **Van Kerkhove, Alan P., c/o**
**EASTMAN KODAK COMPANY**
**Patent Legal Staff, 343 State Street**
**Rochester, New York 14650-2201(US)**
Inventor: **White, Graham M., c/o EASTMAN**
**KODAK COMPANY**
**Patent Legal Staff, 343 State Street**
**Rochester, New York 14650-2201(US)**

(74) Representative: **Brandes, Jürgen, Dr. et al**
**Wuesthoff & Wuesthoff Patent- und**
**Rechtsanwälte Schweigerstrasse 2**
**W-8000 München 90(DE)**

(54) **Laser edgemarking equipment.**

(57) Edgemark equipment 10 for focusing indicia on the lengthwise edge of a continuously moving web 12 comprises a laser printer 14 mounted to a moveable base 16. The printer 14 ablates (etches) the target web 12 with a series of directional beams. An edge detector 28 senses the edge of web 12 during operations and ensures accurate positioning of the printer 14 on the web 12 by signalling a linear actuator 30 to adjust the printer 14 when necessary. A central operating system 32 comprising a pressure sensitive screen 34 is provided for enabling all edgemarking equipment 10 functions at operator command.

Fig. 1

## TECHNICAL FIELD

The invention relates to edgemarking equipment, and more particularly to equipment for focusing indicia on a pre-selected location of a continuously moving web.

## BACKGROUND OF THE INVENTION

Edgemarking involves printing characters, both human and machine readable, in the form of an identification number on the lengthwise edge of a web. The web may be a photographic or non-photographic material such as acetate or Estar® film base. Laser edgemarks are composed of a series of characters consisting of, in sequence, a registration mark, the edgemark equipment number, and incremental roll numbers and footage numbers printed on one foot length knurled portions on the edge of the film base during manufacturing. Edgemarks are used by the film manufacturer to provide "built in" roll identification which permits direct verification of roll identity and defect location during all stages of the manufacturing process.

In conventional equipment for printing characters on a moving web, latent imaging is widely used as the means for recording the information. The light emitting elements of the conventional edgemarking equipment employs an array of low power light emitting sources capable of exposing photosensitive films but not capable of physically marking non-photosensitive materials such as acetate film base. Therefore, conventional edgemark equipment using a latent imaging system does not have the capability to etch other types of material such as acetate or Estar® support film bases, the latter materials generally requiring high energy radiation.

U.S. Patent No. 4,854,696 relates to an apparatus for physically marking photographic film with a UV laser. In this system, a mask is imaged onto a film product. The image of the mask is vaporized onto the film by an optical system. The laser will come to focus at a predetermined point but the image of the mask will come to focus at the image plane (a position that is at a greater distance from the lens than the focal distance of the lens).

U.S. Patent No. 4,865,872 relates to an inspection apparatus which identifies the location and nature of defects on a strip by providing markings along predetermined longitudinal zones of the strip. The patent teaches an edge sensor for determining the edge of a moving strip and a ink or paint media for identifying the location of defects within a certain longitudinal zone.

U.S. Patent No. 4,508,438 relates to a side printing apparatus for photographically exposing latent images or marks onto a strip of moving photosensitive material. The subject patent uses a low power light source as the light emitting member capable of exposing photosensitive film but not capable of physically marking non-photosensitive material.

U.S. Patent No. 4,519,701 is directed to a side printing device for providing latent images (marks) onto a moving photographic film. The subject patented device is characterized by means to adjust the imaging process to various kinds of film with different sensitivities.

U.S. Patent No. 4,548,492 is directed to an apparatus for printing latent images onto a photographic strip which moves in both a forward and reverse direction without double exposure of the film.

## SUMMARY OF THE INVENTION

It is, therefore, an object of the present invention to provide edgemarking equipment that uses a laser printer as the means for focusing indicia on a moving web.

Another object of the invention is to provide edgemarking equipment that produces accurate position information for defect detection in all phases of web manufacture.

Another object of the invention is to provide edgemark equipment that provides material tracking information permanently integrated into the coated product so that reliance on external data tracking is eliminated.

Yet another object of the present invention is to provide edgemark equipment for enabling "built in" web roll identification which permits direct verification of roll identity and waste identity during all stages of the manufacturing process.

For accomplishing these and other objects of the invention, there is provided edgemark equipment for focusing indicia on the lengthwise edge of a continuously moving photographic film or web. The edgemark equipment of the present invention uses a directional light emitting printer having a plurality of light emitting sources for focusing indicia on the moving web. A base for supporting the printer is mounted to the edgemark equipment in a manner to allow the printer to be retractable during operations. The web is supported by a plurality of rollers, including a driven roller, which enable the web to continuously move during edgemarking. A linear actuator is also provided to adjust the printer to web positioning. Further, an edge detector is provided for sensing the web position and signaling the linear actuator to adjust the position of the printer accordingly. The edgemark equipment is controlled by a central control system which has a pressure sensitive touchscreen for enabling all functions of the equipment in response to operator command.

## BRIEF DESCRIPTION OF THE DRAWINGS

The foregoing as well as other objects, features and advantages of this invention will become more apparent from the following detailed description when taken in conjunction with the appended figures in which

Figure 1 shows a schematic view of the laser edgemark equipment in its preferred embodiment;

Figure 2 shows side view in partial section of the laser edgemark equipment of the present invention;

Figure 3 shows the laser printer in a first, second and third position relative to a moving web;

Figure 4 shows a diagrammatic view of the laser beam array forming ablated characters on a web;

Figure 5 shows a block diagram of the control system of the laser edgemark equipment.

## DETAILED DESCRIPTION OF THE INVENTION

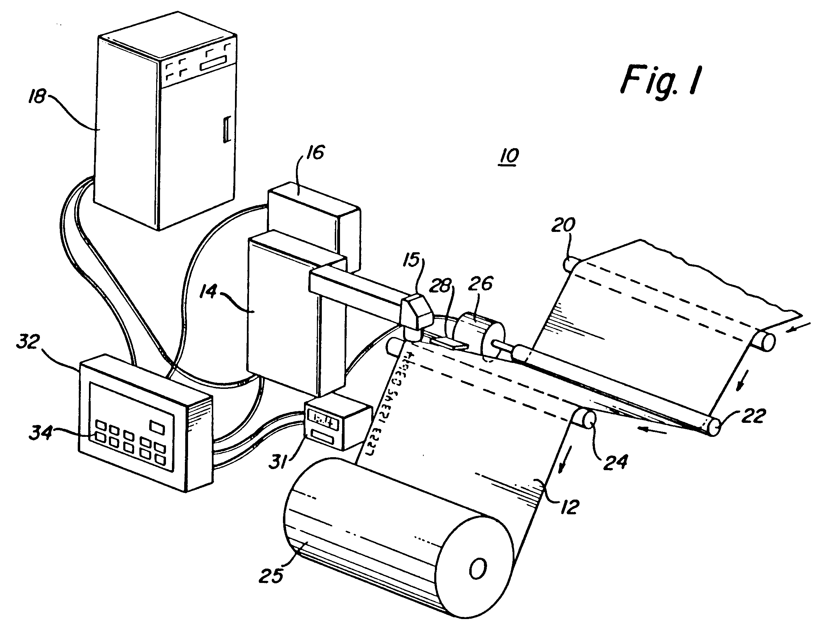

Referring now to the drawings, and more particularly to Figure 1, there is schematically shown the edgemarking equipment, generally designated 10, for focusing laser beams onto a continuously moving film base or web 12. In the preferred embodiment, the equipment 10 basically comprises a laser printer 14, having a beam tube 15 for emitting laser beams, retractably mounted to a moveable base 16. Power is supplied to the laser printer 14 by any conventional power supply 18 suitable for this application. The power supply 18 provides the necessary energy to the laser printer 14 to cause the laser printer 14 to ablate (etch) the target web 12 or film base. Those skilled in the art will appreciate that any appropriate laser printer 14, power supply 18 and beam tube 15 may be used in the present invention. A suitable combination, for instance, comprising a laser printer 14 for printing a desired message on the web 12, a beam tube 15 for directing laser beams to a target web 12, and a power supply 18 for energizing the laser printer 14 is a Digimark® laser manufactured by the Directed Energy, Inc. The preferred printer 14 is a medium power $CO_2$ fully shielded laser which has from about 5 to about 7 light emitting sources. Each light emitting source of the printer 14 operates at about 20 watts maximum average power and emission is in the mid infrared at a wavelength of 10.6 microns. The moveable base 16 allows the laser printer 14 to search for the web 12, reach its inboard limit (not shown), and shutdown and retract if the web 12 is not in its proper position relative to the laser printer 12 during operation. The web 12 is rotatably supported by a plurality of rollers 20, 22, 24, 25. Those skilled in the art will appreciate that any suitable web support means may be used, such as, a plate or an air bar. Roller 20, in this embodiment, a guide roller, alters the path of the web 12 in order to provide adequate web 12 wrap on the upstream roller 22 to prevent web 12 slippage. Roller 22, an encoder roller, is interconnected to a rotary footage encoder 26. The footage encoder 26 ensures accurate spacing of the characters, proper dot spacing (pitch), and proper message spacing on the web 12. While the diameter of roller 22 is not critical, in practice, it is necessary that the diameter be accurately measured and determined to be within .0005 inches because if the diameter of a replacement roller 22 varies by more than the predetermined tolerance limit, a proportional error in web 12 roll length and edgemarked message spacing results. Roller 24, a print roller, keeps the web 12 in registered alignment with the laser printer 14 during operations. Roller 25, a wind-up roller, continuously advances the web 12 along a path past the laser printer 14 for laser edgemarking. Accordingly, web 12 follows a path (shown by arrows) over guide roller 20, then under encoder roller 22 and over print roller 24 placing it in alignment with and spatially separated from the laser printer 14 by a distance (1). Finally, web 12 terminates on roller 25 having thereon a series of predetermined edgemarks. In this embodiment, it is necessary for web 12 to continuously move during the printing process and printing can only take place in the direction of web 12 movement, denoted by the arrows. A drive means (not shown) for driving roller 25 provides the required continuous movement of the web 12. Of course, those skilled in the art will appreciate that any conventional drive system suitable for this application may be used in the laser edgemark equipment 10 to continually advance the web 12 past the laser printer 14 for laser edgemarking. Web 12 velocity may vary depending on the material to be printed on. An edge detector 28 rigidly mounted to the equipment 10 downstream of the print roller 24 and spatially separated from the web 12 in close proximity to the laser beam tube 15 senses the web 12 position and signals a linear actuator 30 to adjust the position of the laser printer 14 accordingly. Although any appropriate edge detector 28 may be used in this embodiment of the laser edgemark equipment 10, a suitable combination comprising a moveable base 16, an edge detector 28 and a linear actuator 30 is an AccuGuide® I Electronic Web Guide Control System manufactured by Accuweb Inc. In another embodiment, a remote LED display 31 is provided to indicate the amount of web 12 edgemarked and on windup driven roller 25. Finally, the laser edgemark equipment 10 of the present invention is operated by a centrally controlled touchscreen operating system 32. Control system 32 has a compact pressure sensitive screen 34 that controls all operations of the laser edgemark equipment 10.

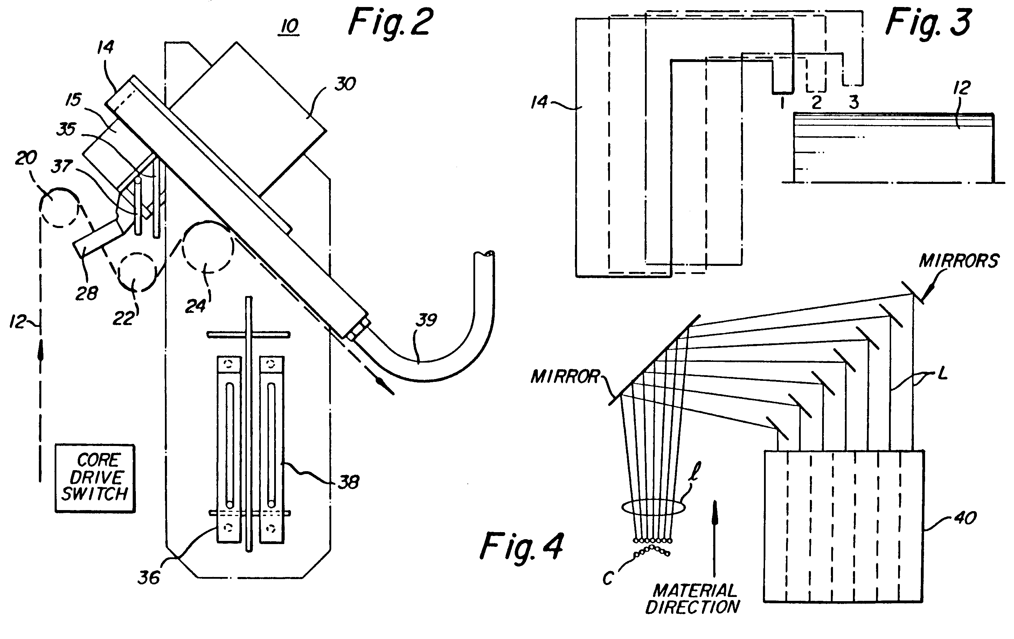

Turning next to Figure 2, in an alternative embodiment, the web 12 is cooled by a stream of air passing through tube 35 and directed at the point of laser beam impingement on the web 12. The air blast through tube 35 prevents ignition of the web 12 during operations of the edgemark equipment 10. The air blast directed at the web 12 through tube 35 also prevents particle settlement on the focusing lens (shown in Fig. 4) of the laser printer 14. A pressure sensor 36 operably interconnected to the control system 32 shuts the edgemark equipment 10 down should the air flow cease. A particular pressure sensor 36 appropriate in this embodiment of the laser edgemark equipment 10 is a Photohelic Sensor® manufactured by the Dwyer Corp. Also, a vacuum tube 37 connected to a vacuum pump (not shown) is operably interconnected to the laser edgemark equipment 10 in close proximity of the laser printer 12 to remove vapors created during laser edgemark equipment 10 operations. Settings for air and vacuum sensors 36, 38 found to be acceptable for operating the laser edgemark equipment 10 are displayed in Table 1.

Table 1

| Setting | Operating Air Pressure/Vac. (In. $H_2O$) | Low Limit Set (In. of $H_2O$) | Air Flow (CFH) |
|---|---|---|---|
| Air | 100 | 60 | 125 |
| Vacuum | 32 | 15 | 420 |

A water pump (not shown) having a water supply line 39 is also mounted to the laser edgemark equipment 10, in an alternative embodiment, to supply cooling water to the laser printer 14 during operations. A thermal overload (not shown) is operably interconnected to the laser printer 14 and will shut the laser printer 14 down if there is a pump failure.

Turning next to Figure 3, the laser printer 14 is shown in a first, second and third position relative to the web 12 during operation of the edgemark equipment 10. Positions 1 and 3 are illustrative of the laser printer 14 not being in alignment with the web 12 for reasons indicated hereinbefore. Position 2 illustrates the position of the laser printer 14 in registered alignment with a predetermined position on the web 12 where the message is to be printed. After the laser printer 14 marks a message on a predetermined lengthwise location on the continuously moving web 12, the laser printer 14 idles momentarily until control system 32 instructs it to print the next message on another location on web 12 downstream of the preceding edgemark.

Turning now to Figure 4, in operation, the laser edgemark equipment 10 prints in the form of dot matrix characters *C* which are ablated (etched) into the continuously moving web 12 by seven lasers 40. In practice, from about 5 to about 7 lasers 40 have been successfully used in this embodiment of the laser printer 14 for edgemarking a continuously moving web 12. Laser beams L are electrically turned on and off corresponding to signals from a character generator (not shown). Each laser beam L corresponds to one of seven dot positions in the 7 x 5 matrix character *C*. The laser beams L are fired when the web 12 to be printed translates to the proper column position of the character *C*. When the web 12 translates to the next column position of the character *C* the laser beams L fire again. The characters *C* height and depth of field, i.e., web 12 position relative to the final focusing lens (1), are determined by the focal length of the final focusing lens (1). Table 2 below shows some typical operating focal length with corresponding character *C* height and depth fields successfully used in the laser edgemark equipment 10 of the present invention:

Table 2

| Focal Length (in.) | Character Ht. (in.) | Depth of Field (in.) |
| --- | --- | --- |
| 1.0 | 0.056 | 0.002 |
| 1.5 | 0.085 | 0.005 |
| 2.5 | 0.141 | 0.013 |
| 5.0 | 0.242 | 0.053 |

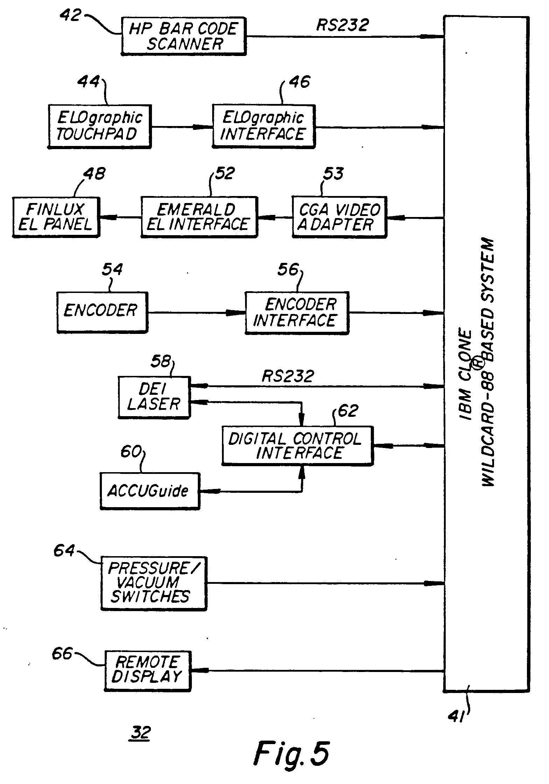

Turning finally to Figure 5, the block diagram of the central operating system 32 (Fig. 1) for the edgemark equipment 10 is shown. The control system 32 is compact with a pressure sensitive screen 34 (Fig. 1) that controls operations of the laser edgemark equipment 10. The control system 32 comprises an IBM PCXT® clone computer system 41 to which all electronic elements described hereinbelow are interconnected and consists of 6 printed circuit boards (not shown). Printed circuit boards used in this embodiment include: a Wildcard-88® manufactured by Intel Corporation which is the central processing unit for the system; a passive Backplane (7 + 3)®, a RAM-640® which provides up to 640K DRAM for the system 32; I/O-24® which provides 24 TTL input/output points for equipment 10 interface; Disk 360/1440® which provides control for an on line boot disk (not shown); and a Super Com 232 + ® which provides 2 RS232 serial ports and 1 parallel printer port. A bar code scanner 42 is provided for fast entry of bar coded information to the system 32, such as web 12 (Fig 1) roll number. A pressure sensitive resistive touchpad 44 overlay and controller (not shown) are incorporated to provide easy access to the central control system 32. Moreover, an electroluminescent flat panel 48 having a minimum resolution of 640 x 200 dots is incorporated in the control system 32 for displaying information to the operator. A color graphics adapter 53 (CGA video adapter) provides video signals for the control system display 34. A suitable CGA adapter 53 is a Video-CGA® manufactured by Peripheral Equipment Inc. A RGB to Electroluminescent (EL) interface board 50 is included to convert the CGA 53 video signals to those suitable for driving the EL interface board 50. An encoder interface 56 communicating with encoder electronics 54 is incorporated to indicate to the control system 32 the amount and direction of web 12 travel. Laser printer electronics 58 cooperates with a digital control interface 62 and an web guide control 60 in the control system 32 for enabling the laser printer 14 (Fig 1) to print on a lengthwise edge of the moving web 12. A digital control interface 62 is also included to control various relays integral to the laser electronics 58 and the web guide control electronics 60. The interface 62 is capable of controlling up to 32 500 milliamp relays. Remote display electronics 66 are incorporated in the control system 32, in an alternative embodiment, to enable the equipment 10 (Fig. 1) to track the amount of edgemarked web 12.

In operation, the screen 34 of the control system 32 is activated by gently pressing against a predetermined region of the screen 34 with a fingertip. The screen 34 then detects the pressure and activates the chosen operation. The edgemark control system 32 incorporates an electroluminescent screen 34 (Fig. 1) with a pressure sensitive touch pad overlay (not shown)for operator interface. By touching the correct series on the screen 34, the operator can alter all printing parameters. In operations, the operator activates the power function and the system 32 performs various initialization functions as necessary, such as, loading equipment 10 number, default web 12 roll number, touchscreen calibration parameters and number of rotary encoder 28 pulses per foot of web travel in the control system 32 memory from a disk. The laser printer 14 (Fig 1) is automatically moved to a retracted position (Figure 3) relative to the web 12 and the laser printer 14 is then disabled. In order to initiate the laser edgemarking equipment 10, the operator must first enter the necessary information about the web 12 to be marked. The operator presses the button identified as **Last Foot** on the control system 32. A numeric keypad is then displayed and the operator then keys in the desired length of the web 14 in the form of a roll to be marked by the laser printer 14. Next the operator presses the button marked **Test Foot** on the control system 32. The numeric keypad is again displayed and the operator then enters the desired amount of web 12 test footage required. The operator then presses the button marked **Roll Number** on the control system 32. A screen will then appear with several choices for default roll numbers or the operator may enter a different web 12 roll number using the numeric keypad. A confirmation screen then appears. The operator must then press the **Start** button on the control system 32. The laser printer 14 (Fig 1) is then moved into alignment with the web 12 and the edge tracking system 28 is enabled. At the same time, the correct message to be printed by the laser printer 14 on the lengthwise edge of the web 12 is generated and loaded into the laser printer 14 via a RS232 link. Laser printer 14 is enabled and thus begins to print the desired message every foot along the lengthwise edge of the web 12 with the footage identification field of the message incremented each foot of the web 12. Laser printing will continue until the operator suspends it by pressing the **No Print** button on the control system 32. Alternatively, in the case of a laser edgemark equipment 10 problem, a **Status Line** on the display panel will advise the operator of operating conditions such as laser printer 14 status, web 12 winding speed, time, date, equipment 10 number, footage number, test footage, and expected cut length. In the event of a serious problem, laser edgemarking of the current web 14 roll can be terminated by the operator by pressing the **Stop Laser Emission** button on the control system 32 followed by a confirmation button. Printing by the laser printer 14 will be suspended and the laser printer 14 moved away from the web 12 by the moveable base 16. Laser edgemarking is resumed by the operator by pressing the **Control Printer** button on the control system 32. A new screen then appears and the operator either presses **Retract Printer** or **Align**, the latter command aligns the laser printer 14 with the web 12 for continuation of laser edgemarking.

The invention has been described in detail with reference to preferred embodiments thereof but it will be understood that variations and modifications can be effected within the spirit and scope of the invenion.

## Claims

1. Equipment for focusing indicia on the lengthwise edge of a continuously moving web, said equipment comprising:
   a) a directional light emitting printer means having a plurality light emitting sources retractably mounted to a base for focusing indicia on said web, said base being moveably mounted to said equipment;
   b) means, cooperating with said equipment, for supporting said web and wherein said support retains said web in registered alignment with said printer;
   c) means, cooperating with said web support means, for driving said support so that said web continuously moves laterally past said printer;
   d) a linear actuator means, cooperating with said printer means, for adjusting the position of said printer means relative to said web in response to a signal;
   e) an edge detector means, cooperating with said linear actuator means, for sensing said web and signaling said linear actuator means to adjust the position of said printer means;
   f) a power supply for energizing said printer means; and
   g) a control system integrally cooperating with said equipment for centrally controlling said equipment for marking edgemarks on said web at operator command.

2. Equipment recited in claim 1 characterized in that said directional light emitting printer means has from 5 to 7 light emitting sources.

3. Equipment recited in claim 2 characterized in that said light emitting sources each has an average output power of up to 20 watts.

4. Equipment recited in claim 3 characterized in that said light emitting sources each has an operating wavelength of $10.6\mu$.

5. Equipment recited in claim 1 further comprising means for measuring the length of said edgemarked web.

6. Equipment recited in claim 3 further comprising means for cooling said web during edgemarking.

7. Laser edgemarking equipment for focusing indicia on a continuously moving web, said equipment comprising:
   a) a laser printer retractably mounted to a moveable base, said base being moveably mounted to said equipment;
   b) means for drivably supporting a moving web;
   c) a linear actuator means, cooperating with said laser printer, for adjusting the position of said laser printer relative to said web in response to a signal so that said printer and said web are in registered alignment;
   d) an edge detector means, cooperating with said linear actuator means, for sensing said web and signaling said actuator means to adjust the position of said laser printer accordingly;
   e) a power supply means for energizing said laser printer; and,
   f) a control system integrally cooperating with said equipment for centrally controlling said edgemarking equipment.

8. The laser edgemark equipment of claim 7 characterized in that said laser printer comprises from 5 to 7 lasers.

9. The laser edgemark of claim 8 characterized in that each of said lasers has an average output power up to 20 watts.

*Fig. 1*

EP 0 519 391 A1

Fig. 3

Fig. 2

Fig. 4

*42* HP BAR CODE SCANNER — RS232 →

*44* ELOgraphic TOUCHPAD → *46* ELOgraphic INTERFACE →

*48* FINLUX EL PANEL ← *52* EMERALD EL INTERFACE ← *53* CGA VIDEO ADAPTER ←

*54* ENCODER → *56* ENCODER INTERFACE →

*58* DEI LASER — RS232 → *62* DIGITAL CONTROL INTERFACE →

*60* ACCUGuide →

*64* PRESSURE/ VACUUM SWITCHES →

*66* REMOTE DISPLAY →

IBM CLONE WILDCARD-88® BASED SYSTEM

*41*

*32*

**Fig. 5**

11

## DOCUMENTS CONSIDERED TO BE RELEVANT

EP 92110124.2

| Category | Citation of document with indication, where appropriate, of relevant passages | Relevant to claim | CLASSIFICATION OF THE APPLICATION (Int. Cl.5) |
|---|---|---|---|
| A | EP - A - 0 279 505 (THE WIGGINS TEAPE GROUP) * Column 3, line 8 - column 8, line 40; fig. 1-10 * | 1-9 | G 03 B 17/24 B 23 K 26/00 |
| A | EP - A - 0 329 438 (THE WIGGINS TEAPE GROUP) * Abstract; fig. 1,7 * | 1,7 | |
| A | US - A - 4 554 560 (KANAOKA et al.) * Column 2, line 63 - column 4, line 51; fig. 1-4 * | 7 | |
| D,A | US - A - 4 854 696 (GUEZ) * Abstract; fig. 1,4 * | 1,7 | |

**TECHNICAL FIELDS SEARCHED (Int. Cl.5)**

B 23 K
G 03 B

The present search report has been drawn up for all claims

| Place of search | Date of completion of the search | Examiner |
|---|---|---|
| VIENNA | 02-09-1992 | BAUER |

EPO FORM 1503 03.82 (P0401)